# EUROPÄISCHE PATENTSCHRIFT

(11) **EP 1 470 972 B1**
(45) Veröffentlichungstag und Bekanntmachung des Hinweises auf die Patenterteilung: **21.01.2009**
(21) Anmeldenummer: 04008177.0
(22) Anmeldetag: 03.04.2004
(51) Int. Cl.: B60R 25/04, B60R 25/02

(54) **Lenksäulenschloss**
Steering lock
Antivol de direction

(30) Priorität: 24.04.2003 DE 10319580
(43) Veröffentlichungstag der Anmeldung: 27.10.2004
(73) Patentinhaber: Valeo Schalter und Sensoren GmbH, 74321 Bietigheim-Bissingen (DE)
(72) Erfinder: Bosch, Jürgen, 86757 Wallerstein (DE); Preinfalk, Hans, 74357 Bönnigheim (DE); Schlentrich, Jörg, 85229 Markt Indersdorf (DE); Linder, Anton, 86672 Thierhaupten-Neukirchen (DE); Lieb, Kurt, 63500 Seligenstadt (DE)
(74) Vertreter: Bulling, Alexander

(56) Entgegenhaltungen:
- EP-A- 0 731 005
- DE-A- 10 107 992
- DE-A- 10 150 708
- DE-A- 19 733 249
- DE-A- 19 921 889

## Beschreibung

Die Erfindung betrifft ein Lenksäulenschloss zur Anordnung an die Lenksäule eines Fahrzeugs, insbesondere eines Kraftfahrzeugs, mit einem Gehäuse, das einen Durchbruch für die Lenksäule des Fahrzeugs aufweist und mit einem Verriegelungsmechanismus zur Verriegelung der Lenksäule, bzw. der Lenkwelle der Lenksäule, gegenüber dem Gehäuse. Lenksäulenschlösser dienen als Diebstahlschutz und verriegeln im verschlossenen Zustand die Lenksäule, bzw. die Lenkwelle der Lenksäule, mechanisch. Dadurch wird ein Verdrehen der Lenksäule, bzw. der Lenkwelle der Lenksäule, über das Lenkrad verhindert.

Lenksäulenschlösser sind in vielfältiger Art und Weise bekannt. Da die Lenksäulenschlösser ein Verdrehen des Lenkrades auch unter Gewaltanwendung verhindern sollen, sind sie vergleichsweise solide ausgebildet und weisen in der Regel ein Gehäuse aus einem metallischen Werkstoff auf.

Im Lenkstockbereich der Fahrzeuge befinden sich eine Reihe von weiteren Schaltern, so beispielsweise Lenkstockschalter, Zündanlassschalter und dergleichen.

Aus der DE 195 0 826 A1, die dem Oberbegriff des Anspruchs 1 entspricht, ist ein Lenkschloss bekannt geworden, bei dem an einem Gehäuse für den Verriegelungsmechanismus ein Zündanlassschalter angeordnet werden kann. Der Zündanlassschalter ist dabei, wie in der Fig. 2 der genannten Druckschrift deutlich gezeigt ist, am Gehäuse des Lenkschlosses abnehmbar montierbar. Der Zündanlassschalter ist folglich als separater Schalter in einem eigenen Gehäuse, das in der Regel aus Kunststoff ist, ausgebildet.

Aus der DE 101 50 708 A1 ist ein Zündschlosssystem für Kraftfahrzeuge bekannt geworden, bei dem eine Verriegelungseinrichtung mit einer Aufnahme für einen Betätigungszylinder und einem Zündanlassschalter gekoppelt ist.

Der Erfindung liegt die Aufgabe zugrunde, einen effektiveren Diebstahlschutz für Fahrzeuge bereitzustellen.

Diese Aufgabe wird durch ein Lenksäulenschloss mit den Merkmalen des Anspruchs 1 gelöst.

Beim bekannten Stand der Technik ist der Zündanlassschalter, der zum Starten des Fahrzeugaggregats dient, als separater Schalter in einem eigenen Gehäuse ausgebildet. Der im Lenkstockbereich des Fahrzeugs angeordnete Zündanlassschalter ist, je nach Fahrzeugtyp, verschieden schwer zugänglich. Leicht zugängliche Zündanlassschalter können beim Diebstahlversuch kurzgeschlossen werden; das Antriebsaggregat kann dann gestartet werden.

Dadurch, dass bei der Erfindung der Zündanlassschalter von dem in der Regel sehr solide ausgebildeten Gehäuse des Lenksäulenschlosses sicher geschützt und insbesondere manipuliersicher aufgenommen wird, wird der Diebstahlschutz erhöht. Erfindungsgemäß wird der Zündanlassschalter folglich vom vergleichsweise solide ausgebildeten Gehäuse des Lenksäulenschlosses geschützt.

Dabei ist der Zündanlassschalter als separat handhabbare Baugruppe in einem eigenen Schaltergehäuse untergebacht, das beispielsweise aus Kunststoff sein kann. Das Schaltergehäuse wird bei der Montage des Lenksäulenschlosses von dem Gehäuse des Lenksäulenschlosses schützend umgeben. Das Vorsehen einer separat handhabbaren Baugruppe in beispielsweise einem Kunststoffgehäuse hat den Vorteil, dass die vergleichsweise empfindlichen Bauteile des Zündanlassschalters bei der Montage des Zündanlassschalters mit dem Lenksäulenschloss nicht beschädigt werden können.

Bei einer vorteilhaften Ausführungsform der Erfindung umfasst das Gehäuse ein den Verschließmechanismus aufnehmendes Grundgehäuseteil und ein den Zündanlassschalter aufnehmendes Schaltergehäuseteil. Hierdurch wird gewährleistet, dass der vergleichsweise empfindliche Zündanlassschalter nicht durch die Mechanik des Verriegelungsmechanismus negativ beeinträchtigt wird.

Dabei kann vorteilhafterweise vorgesehen sein, dass das Grundgehäuseteil und das Schaltergehäuseteil als separate Bauteile ausgebildet sind. Die separaten Bauteile werden dann bei der Montage miteinander gefügt. Ein Fügen kann beispielsweise lösbar oder unlösbar erfolgen. Als Fügemittel kommen beispielsweise Steckverbindungen, Klemmverbindungen, Rastverbindungen, Schnappverbindungen oder dergleichen in Betracht. Ferner ist denkbar, die Gehäuseteile nach der Montage miteinander zu verstemmen oder zu verschrauben.

Dabei ist vorteilhaft, wenn der Zündanlassschalter von den einzelnen Gehäuseteilen wenigstens weitgehend schützend abgekapselt wird. Beispielsweise kann der Zündanlassschalter zwischen dem Grundgehäuseteil und dem Schaltergehäuseteil so angeordnet sein, dass er nicht zugänglich ist.

Vorteilhafterweise sieht das Schaltergehäuse des Zündanlassschalters einen Steckeranschluss vor, der im montierten Zustand wenigstens abschnittsweise aus dem Gehäuse des Lenksäulenschlosses herausragt. Dadurch wird erreicht, dass zum einen der Zündanlassschalter manipuliersicher im Gehäuse des Lenksäulenschlosses untergebracht ist. Zum anderen kann ein Anschließen des Zündanlassschalters mit einer elektrischen Versorgung oder einem Steuergerät auf einfache Art und Weise erfolgen.

Bei einer weiteren Ausführungsform der Erfindung ist der Zündanlassschalter mittels eines Schlüssels, eines Knopfdrucks, eines Näherungssensors oder dergleichen betätigbar. Unabhängig von dem Betätigungsmittel für den Zündanlassschalter ist dieser manipuliersicher im Gehäuse des Lenksäulenschlosses untergebracht.

Vorteilhafterweise besteht das Gehäuse, beziehungsweise das Grundgehäuseteil und das Schaltergehäuseteil, aus einem metallischen Werkstoff. Insbesondere kommen in Betracht Aluminiumdruckguss oder Zinkdruckguss.

Weitere vorteilhafte Ausgestaltungen und Einzelheiten der Erfindung sind der folgenden Beschreibung zu entnehmen, in der die Erfindung anhand der in der Zeichnung dargestellten Ausführungsform näher beschrieben und erläutert ist.

Es zeigen:
- Figur 1: ein erfindungsgemäßes Lenksäulenschloss in perspektivischer Darstellung;
- Figur 2: das Lenksäulenschloss gemäß Figur 1 im nicht montierten Zustand.

Das in den Figuren dargestellte Lenksäulenschloss 10 ist zur Anordnung an eine nicht dargestellte Lenksäule eines Kraftfahrzeugs vorgesehen. Das Lenksäulenschloss 10 umfasst ein insgesamt zweiteiliges Gehäuse, das ein Grundgehäuseteil 12 und ein Schaltergehäuseteil 13 umfasst. Das Grundgehäuseteil 12 weist einen zylinderartigen Durchbruch 14 auf, durch den im montierten Zustand sich die Lenksäule des Fahrzeugs erstreckt. Über Befestigungsabschnitte 16 ist das Grundgehäuseteil karosserieseitig anordenbar. Das Grundgehäuseteil nimmt nicht näher dargestellte und nicht näher erläuterte Bauteile eines Verriegelungsmechanismus auf, mit dem die Lenksäule, bzw. die Lenkwelle der Lenksäule, in einer bestimmten Position gegenüber dem Grundgehäuseteil, und damit gegenüber der Fahrzeugkarosserie, verriegelt werden kann. Der Verriegelungsmechanismus kann entweder mechanisch oder elektrisch betätigbar sein. Das Grundgehäuseteil ist aus einem metallischen Werkstoff.

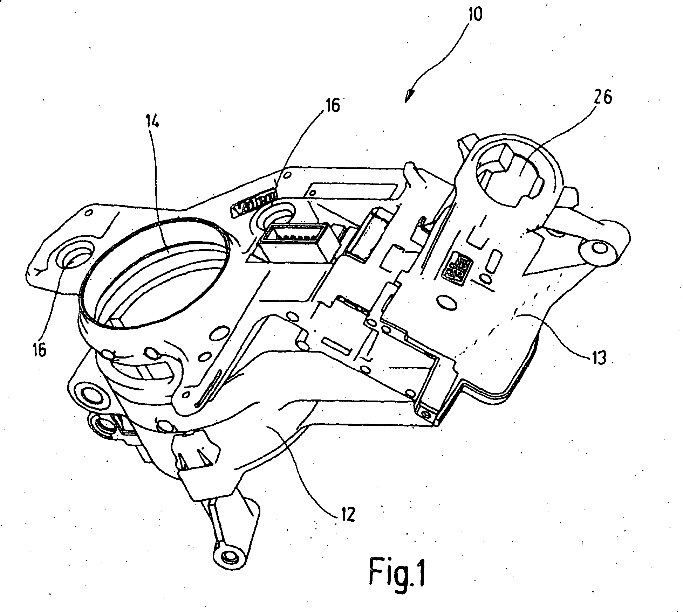

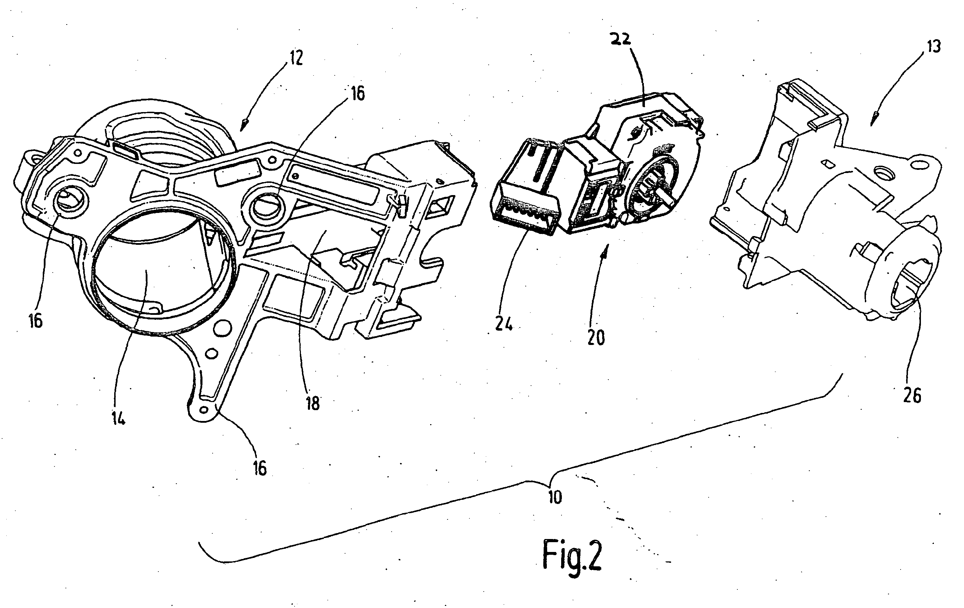

Wie insbesondere aus der Figur 2 hervorgeht, weist das Grundgehäuseteil 12 einen Aufnahmeraum 18 auf, der zur Aufnahme eines Zündanlassschalters 20 dient. Der Zündanlassschalter 20 ist in einer separat handhabbaren Baugruppe in einem Schaltergehäuse 22 untergebracht, das beispielsweise aus Kunststoff ausgebildet sein kann. Das Schaltergehäuse 22 sieht einen Steckeranschluss 24 vor, der den Zündanlassschalter 20 mit Strom versorgt. Im montierten Zustand des Lenksäulenschlosses, wie er in der Figur 1 gezeigt ist, ist der Zündanlassschalter 20 in dem Aufnahmeraum 18 angeordnet. Der Steckeranschluss 12 ist im montierten Zustand des Lenksäulenschlosses 10 zugänglich. Dies hat den Vorteil, dass das erfindungsgemäße Lenksäulenschloss 10 als gesamte Baugruppe vormontiert werden kann. Ein Kontaktieren des Zündanlassschalters 20 über den Steckeranschluss 24 ist dennoch möglich.

Außerdem ist der Zündanlassschalter 20 von dem Schaltergehäuseteil 13 weitgehend vollständig abgedeckt. Der Zündanlassschalter 20 wird folglich von den beiden Gehäuseteilen 14, 13 schützend abgekapselt. Ein Manipulieren des Zündanlassschalters bei einem Diebstahlversuch ist folglich nicht möglich. Der Zündanlassschalter 20 ist nicht zugänglich.

Bei der Montage des Lenksäulenschlosses 10 wird das Schaltergehäuseteil 13 mit dem Grundgehäuseteil 12 gefügt. Das Fügen kann lösbar oder unlösbar erfolgen. Als lösbares Fügen kommt ein Verschrauben oder Verrasten der beiden Teile 14, 13 in Betracht. Als unlösbares Fügen ist ein Verkleben, Verschweißen, Verstemmen oder dergleichen denkbar.

Das Schaltergehäuseteil 13 umfasst eine weitgehend zylindrische Aufnahme 26 für einen Schließzylinder eines Schlosses, über das der Zündanlassschalter 20 betätigbar ist.

Das Grundgehäuseteil 16 und das Schaltergehäuseteil 13 sind vorzugsweise aus dem gleichen Werkstoff, insbesondere aus Aluminiumdruckguss oder Zinkdruckguss.

## Patentansprüche

1. Lenksäulenschloss (10) zur Anordnung an die Lenksäule eines Fahrzeugs, insbesondere eines Kraftfahrzeugs, mit einem ein oder mehrteiligen Gehäuse (12, 13) aus einem metallischen Werkstoff, das einen Durchbruch für die Lenksäule des Fahrzeugs aufweist, das einen Verriegelungsmechanismus zur Verriegelung der Lenksäule, bzw. der Lenkwelle der Lenksäule, gegenüber dem Gehäuse (12, 13) aufnimmt und weitgehend schützend abkapselt und das eine Aufnahme (26) für einen Schließzylinder zur Betätigung des Zündanlassschalters (20) umfasst, und mit einem ein ein eigenes Schaltergehäuse (22) aufweisenden Zündanlassschalter (20), **dadurch gekennzeichnet, dass** das Gehäuse (12, 13) den Zündanlassschalter (20) derart aufnimmt, dass das Schaltergehäuse (22) im montierten Zustand vom Gehäuse (12, 13) schützend umgeben und wenigstens weitgehend abkapselt ist.

2. Lenksäulenschloss (10) nach Anspruch 1, **dadurch gekennzeichnet, dass** das Gehäuse ein den Verschließmechanismus aufnehmendes Grundgehäuseteil (12) und ein den Zündanlassschalter (20) aufnehmendes Schaltergehäuseteil (13) umfasst, wobei das Grundgehäuseteil (12) und das Schaltergehäuseteil (13) als separate, miteinander fügbare Bauteile ausgebildet sind.

3. Lenksäulenschloss (10) nach einem der vorhergehenden Ansprüche, **dadurch gekennzeichnet, dass** das Schaltergehäuseteil (13) die Aufnahme (26) für den Schließzylinder umfasst.

4. Lenksäulenschloss (10) nach Anspruch 3, **dadurch gekennzeichnet, dass** das Schaltergehäuse (22) einen Steckeranschluss (24) aufweist, der im montierten Zustand wenigstens abschnittsweise aus dem Gehäuse (12, 13) herausragt.

5. Lenksäulenschloss (10) nach einem der vorhergehenden Ansprüche, **dadurch gekennzeichnet, dass** der Zündanlassschalter (20) mittels eines Schlüssels, eines Schließzylinders, eines Knopfdrucks, eines Näherungssensors, oder dergleichen betätigbar ist.

## Claims

1. Steering column lock (10) for arrangement on the steering column of a vehicle, in particular of a motor vehicle, comprising a one-part or multi-part housing (12, 13) of a metallic material which has a passage for the steering column of the vehicle, which holds a locking mechanism for locking the steering column or the steering shaft of the steering column in relation to the housing (12, 13) and substantially encapsulates said locking mechanism in a protective manner and which comprises a receptacle (26) for a lock cylinder for actuating the ignition switch (20), and comprising an ignition switch (20) having a separate switch housing (22), **characterized in that** the housing (12, 13) holds the ignition switch (20) in such a way that, in the assembled state, the switch housing (22) is surrounded in a protective manner by the housing (12, 13) and is at least substantially encapsulated.

2. Steering lock (10) according to Claim 1, **characterized in that** the housing comprises a base housing part (12) holding the locking mechanism and a switch housing part (13) holding the ignition switch (20), the base housing part (12) and the switch housing part (13) being in the form of separate components which can be joined to one another.

3. Steering column lock (10) according to either of the preceding claims, **characterized in that** the switch housing part (13) comprises the receptacle (26) for the lock cylinder.

4. Steering column lock (10) according to Claim 3, **characterized in that** the switch housing (22) has a plug connection (24) which, in the assembled state, projects at least in sections from the housing (12, 13).

5. Steering column lock (10) according to any of the preceding claims, **characterized in that** the ignition switch (20) can be actuated by means of a key, a lock cylinder, a push button, a proximity sensor or the like.

## Revendications

1. Antivol de direction (10) à monter sur la colonne de direction d'un véhicule, en particulier un véhicule automobile, comportant un boîtier (12, 13), qui est réalisé en une ou plusieurs parties en matériau métallique et comporte un passage pour la colonne de direction du véhicule, qui est destiné à recevoir le mécanisme de verrouillage pour le verrouillage de la colonne de direction, plus précisément du volant de direction de la colonne de direction, par rapport au boîtier (12, 13) et forme en grande partie une capsule protectrice et qui contient un logement (26) pour un barillet de serrure destiné à actionner le contacteur d'allumage (20), et comportant un contacteur d'allumage (20) muni de son propre boîtier (22), **caractérisé en ce que** le boîtier (12, 13) reçoit le contacteur d'allumage (20) de telle sorte que, dans la position montée du boîtier (12, 13), le boîtier du contacteur (22) est entouré de manière protégée et est encapsulé au moins en grande partie.

2. Antivol de direction (10) selon la revendication 1, **caractérisé en ce que** le boîtier comporte une partie de base (12) logeant le mécanisme de verrouillage et une partie pour contacteur (13) recevant le contacteur d'allumage (20), la partie de base (12) et la partie pour contacteur (13) étant réalisées sous forme d'éléments séparés, aptes à être assemblés l'un à l'autre.

3. Antivol de direction (10) selon l'une quelconque des revendications précédentes, **caractérisé en ce que** la partie pour contacteur (13) comporte le logement (26) pour le barillet de serrure.

4. Antivol de direction (10) selon la revendication 3, **caractérisé en ce que** le boîtier du contacteur (22) comporte un raccord à fiches (24) qui, dans la position montée, s'avance par zones hors du boîtier (12, 13).

5. Antivol de direction (10) selon l'une quelconque des revendications précédentes, **caractérisé en ce que** le contacteur d'allumage (20) peut être actionné par une clef, un barillet de serrure, un bouton poussoir, un détecteur de proximité, ou tout élément similaire.
